# EUROPEAN PATENT SPECIFICATION

(11) **EP 1 695 635 B1**
(45) Date of publication and mention of the grant of the patent: **14.04.2010**
(21) Application number: 05425104.6
(22) Date of filing: 25.02.2005
(51) Int. Cl.: A23L 1/39, A23L 1/31, A23L 1/325, A23L 1/212, A23L 1/20, A23L 1/216, A23L 1/48

(54) **Food preparation**
Lebensmittelzubereitung
Préparation culinaire

(43) Date of publication of application: 30.08.2006
(73) Proprietor: Barilla G. e R. Fratelli S.p.A., 43100 Parma (IT)
(72) Inventor: Bocchi, Sonia, I-43058 Sorbolo (Parma) (IT); Cavalieri, Barbara, I-43030 Basilicanova (Parma) (IT); Fanzaghi, Andrea, I-43039 Salsomaggiore Terme (Parma) (IT); Dameno, Franco, I-29100 Piacenza (IT)
(74) Representative: Ferreccio, Rinaldo

(56) References cited:
- EP-A- 0 538 146
- EP-A- 0 930 017
- US-A- 4 418 090
- US-A- 6 039 990
- J. COLBERT: "Falafel Balls in Spicy Tomato Sauce" RECIPE VIEW, [Online] October 1996 (1996-10), XP002362821 Retrieved from the Internet: URL:http://recipeview.com/New/New405.htm> [retrieved on 2006-01-13]
- ANONYMOUS: "Spicy Fish balls in Tomato Sauce" INTERNET ARTICLE, [Online] 15 July 2002 (2002-07-15), XP002362822 Retrieved from the Internet: URL:http://www.recipezaar.com/34263> [retrieved on 2006-01-13]
- PATENT ABSTRACTS OF JAPAN vol. 2000, no. 16, 8 May 2001 (2001-05-08) -& JP 2001 008670 A (YOSHIKAWA HIROKO), 16 January 2001 (2001-01-16)

## Description

### Field of application

In its more general aspect the present invention refers to the food industry sector.

In particular, the present invention refers to the use of a food preparation comprising a tomato sauce and a plurality of polpette, containing fish and/or vegetables and/or legumes, as a condiment for pasta, rice and the like, particularly suitable to meet children's preferences and having a particularly balanced dietetic-nutritional profile.

### State of the art

It is common knowledge that a diet which is both balanced and adequate to keep the body in good health and shape must be very varied, low in fats and, on the other hand, rich in fruits and vegetables.

It is also widely known that in a healthy and balanced diet protein intake should be varied, that is, given by both animal proteins, such as red and white meats and fish, and plant proteins, such as those found in legumes (also important for their fiber content).

However, it is just as widely known that children usually have a strong dislike for fish, vegetables and legumes, especially if such foods are served in a way that does not encourage consumption (for example, fish that has not been de-boned, vegetables in rather large chunks, whole legumes, etc.).

As a consequence, children's diets tend to be quite low in those very foods which we are currently being advised to consume.

US 6039990 describes a vacuum processed fish product in a tomato base cooking sauce.

The problem which the Applicant has dealt with is that of providing a food preparation which on the one hand contains the healthy foods mentioned above (white meats, fish, vegetables and/or legumes) and on the other hand exhibits textural and organoleptic properties such that they appeal also to those why usually have a dislike for most of such foods, such as children.

### Summary of the invention

Such a problem has been solved, according to the invention, by the use of a food preparation comprising a tomato sauce base and a plurality of polpette containing at least one foodstuff chosen among fish, vegetables and legumes in an amount of at least 20% by weight of the total weight of said polpette and chicken and/or turkey, the polpette weighing between 3 and 5 g, as a condiment for pasta or rice.

The aforementioned polpette generally constitute 25-50% by weight of the total weight of the preparation and preferably contain 25-45% by weight of one or more foodstuffs chosen among fish, vegetables and legumes.

Typically, they also include at least one protein binder, usually consisting of whole eggs but also egg white, soy proteins or mixtures of such binders.

Preferably, to achieve an effective flavor adjustment, the polpette also contain cheese, in particular hard cheese, for example grated Parmigiano Reggiano or Grana Padano and/or ricotta cheese.

The texture of the polpette may be modified by the optional addition of cereal grain flours, bread-crumbs, starches, potatoes, cream, etc.

The tomato sauce base includes tomato pulp, finely chopped vegetables (e.g. onion, carrot, celery, pumpkin); olive oil, salt and sugar.

The food preparation according to the invention is used as a condiment for pasta or rice, thus producing a nutritionally balanced dish in terms of carbohydrate, protein and fat content.

The polpette and the tomato sauce base are prepared separately and then mixed in the appropriate proportions at the time of filling of the preparation in small jars or other suitable containers.

The polpette are prepared by extrusion of a pasty mixture containing the above mentioned ingredients, cutting of the extruded mixture rope in 3.5-4.5 g portions, steam pasteurization of such portions, which constitute the polpette to be added to the tomato sauce base.

The sauce base is prepared using conventional techniques, particular care being given to the chopping of the vegetables contained therein, so as to avert the occurrence of chunks large enough to be perceived by children's sensitive palates.

A set number of pasteurized polpette are then dispensed inside small jars and the jar is then filled under vacuum with the tomato sauce base.

The filled jars are then hermetically sealed and sterilized by autoclaving.

### Detailed description

The present invention will be further described with reference to some examples given for illustrative but not limiting purposes.

### EXAMPLE 1

### Fish polpette

| | |
|---|---|
| Grana Padano | 40 |
| Trout | 23,5 |
| Perch | 18 |
| Bread-crumbs | 8 |
| Potatoes | 5 |
| Eggs | 2 |
| Salt | 1,5 |
| Dietary fiber | 1 |
| Flour | 1 |

The values shown above are expressed in percentage weight of the total weight of the composition.

The trout and the perch are minced to a puree in an industrial-type mincer, and are mixed with the previously grated Grana Padano, the bread-crumbs, potatoes, eggs, salt, dietary fiber and the flour in a mixer.

Once a homogeneous pasty mixture is obtained, it is fed under vacuum to an extruder. A strand of the mixture comes out of the extruder die and is cut by means of cutting procedures into portions uniform in size and so as to weigh around 4 g each.

Such portions, which constitute the polpette according to the invention, are placed onto a conveyor belt and sent to a steam pasteurization apparatus. Following a steam treatment at 90°-95°C for around 3-5 minutes, 16 pasteurized polpette are dispensed into 200 ml glass jars. The jars are then filled with the tomato sauce base as hereunder reported.

### Tomato sauce base

| | |
|---|---|
| Tomato pulp | 51 |
| Carrots | 20 |
| Onions | 9 |
| Tomato concentrate | 6,5 |
| Olive oil | 6 |
| Celery | 4,5 |
| Salt | 1,5 |
| Sugar | 1,5 |

In this case also, the values shown above are expressed in percentage weight of the total weight of the tomato sauce.

A tomato sauce was prepared with the ingredients reported above, using the conventional procedures known in the field.

Finally, the sauce was dispensed in the jars already containing the polpette, in such an amount so as to fill each jar.

Finally, the filled jars were hermetically sealed and sterilized by autoclaving at 121 °C for 9-10 minutes.

### Legume and turkey meat based polpette

| | |
|---|---|
| Grana Padano | 25 |
| Turkey | 14 |
| Chick peas | 13 |
| Cannellini beans | 13 |
| Borlotti beans | 13 |
| Carrots | 8 |
| Water | 5 |
| Potatoes | 2 |
| Eggs | 2 |
| Bread-crumbs | 2 |
| Flour | 1 |
| Dietary fiber | 1 |
| Salt | 1 |

The values shown above are expressed in percentage weight of the total weight of the composition.

The chick peas, and the beans, pre-cooked and re-hydrated with water, were reduced to a puree to which the finely minced turkey meat, the previously grated Grana Padano, the eggs, bread-crumbs, flour, celery, potatoes and (finely chopped) carrots, salt, flour and the dietary fiber were added, in a mixer.

Then, the polpette, 4 g in weight each, were prepared as described in example 1 and were steam pasteurized according to the procedures set out in example 1 and then dispensed into 200 ml glass jars, 16 in each jar.

Finally, the jars were filled with the tomato sauce base described in example 1 (to which other types of vegetables may be added, for example pumpkin), hermetically sealed and sterilized by autoclaving at 121 °C for 9-10 minutes.

### Vegetable and chicken meat polpette

| | |
|---|---|
| Chicken | 30 |
| Grana Padano | 20 |
| Bread-crumbs | 13 |
| Carrots | 8 |
| Pumpkin | 7 |
| Zucchini | 6 |
| Spinach | 6 |
| Celery | 3 |
| Cream | 3 |
| Eggs | 1 |
| Dietary fibre | 1 |
| Salt | 1 |

The values shown above are expressed as percentage weight of the total weight of the compositions.

The vegetables listed above were reduced to a puree to which the previously minced chicken meat, the previously grated Parmigiano Reggiano, the eggs, bread-crumbs, cream, flour and the dietary fiber and the salt were added, in a mixer.

Then, the polpette, 4 g in weight each, were prepared as described in example 1 and were steam pasteurized according to the procedures set out in example 1 and deposited in 200 ml glass jars, 16 in each jar.

Finally, the jars were filled with the tomato sauce base described in example 1 (to which ricotta cheese may be added), hermetically sealed and sterilized by autoclaving at 121°C for 9-10 minutes.

The condiments obtained according to the three examples described above were used for flavor evaluation tests addressing 8 to 12-year-old children. They were made to taste pasta dishes prepared with the condiments of the three examples, using a pasta to condiment ratio of 1:1. The dishes very much appealed to the children.

## Claims

1. Use of a food preparation comprising a tomato sauce base and a plurality of polpette containing at least one foodstuff chosen among fish, vegetables and legumes in an amount of at least 20% by weight of the total weight of said polpette, said polpette weighing between 3 and 5 g, as a condiment for pasta or rice, wherein said polpette further include chicken and/or turkey.

2. Use according to claim 1, wherein said polpette constitute 25-50% by weight of the total weight of the preparation.

3. Use according to claim 1, wherein said polpette contain 25-45% by weight of said at least one foodstuff.

4. Use according to any one of the previous claims, wherein said polpette further contain at least one protein binder.

5. Use according to claim 4, wherein said protein binder consists of whole eggs, egg white, soy proteins and mixtures thereof.

6. Use according to any one of the previous claims, wherein said polpette further contain cheese.

7. Use according to claim 6, wherein said cheese is a grated hard cheese or ricotta cheese.

8. Use according to any one of the previous claims, wherein said polpette further contain at least one thickener, chosen among cereal grain flours, bread-crumbs, starches and dietary fibers.

## Patentansprüche

1. Verwendung einer Lebensmittelzubereitung, die eine Tomatensaucenbasis und mehrere "Polpette" (ital. Fleischklößchen) umfasst, die wenigstens ein Nahrungsmittel ausgewählt aus Fisch, Gemüse und Hülsenfrüchte in einem Anteil von wenigstens 20 Gewichts-% des Gesamtgewichts der "Polpette" enthalten, wobei die "Polpette" zwischen 3 und 5 g wiegen, als eine Zutat zu Nudeln oder Reis, wobei die Fleischklößchen ferner Hühnchen und/oder Truthahn enthalten.

2. Verwendung nach Anspruch 1, wobei die "Polpette" 25-50 Gewichts-% des Gesamtgewichts der Zubereitung ausmachen.

3. Verwendung nach Anspruch 1, wobei die "Polpette" 25-45 Gewichts-% des wenigstens einen Nahrungsmittels enthalten.

4. Verwendung nach einem der vorhergehenden Ansprüche, wobei die "Polpette" ferner wenigstens ein Proteinbindemittel enthalten.

5. Verwendung nach Anspruch 4, wobei das Proteinbindemittel aus Vollei, Eiweiß, Sojaproteinen und Mischungen hieraus besteht.

6. Verwendung nach einem der vorhergehenden Ansprüche, wobei die "Polpette" ferner Käse enthalten.

7. Verwendung nach Anspruch 6, wobei der Käse ein geriebener Hartkäse oder Ricottakäse ist.

8. Verwendung nach einem der vorhergehenden Ansprüche, wobei die "Polpette" ferner wenigstens ein Verdickungsmittel enthalten ausgewählt aus Getreidekornmehl, Paniermehl, Stärken und Ballaststoffen.

## Revendications

1. Utilisation d'une préparation alimentaire comprenant une base de sauce tomate et une pluralité de polpettes contenant au moins une denrée alimentaire choisie parmi le poisson, les légumes et les légumineuses dans une quantité d'au moins 20 % en poids du poids total desdites polpettes, lesdites polpettes pesant entre 3 et 5 g, comme condiment pour des pâtes ou du riz, où lesdites polpettes comprennent en outre du poulet et/ou de la dinde.

2. Utilisation selon la revendication 1, dans laquelle lesdites polpettes constituent 25 à 50 % en poids du poids total de la préparation.

3. Utilisation selon la revendication 1, dans laquelle lesdites polpettes contiennent 25 à 45 % en poids de ladite au moins une denrée alimentaire.

4. Utilisation selon l'une quelconque des revendications précédentes, dans laquelle lesdites polpettes contiennent en outre au moins un liant protéique.

5. Utilisation selon la revendication 4, dans laquelle ledit liant protéique consiste en des oeufs entiers, du blanc d'oeuf, des protéines de soja, et leurs mélanges.

6. Utilisation selon l'une quelconque des revendications précédentes, dans laquelle lesdites polpettes contiennent en outre du fromage.

7. Utilisation selon la revendication 6, dans laquelle ledit fromage est un fromage à pâte dure râpé ou du fromage ricotta.

8. Utilisation selon l'une quelconque des revendications précédentes, dans laquelle lesdites polpettes contiennent en outre au moins un épaississant, choisi parmi les farines de grain de céréale, la chapelure, les amidons et les fibres alimentaires.
